Europäisches Patentamt

European Patent Office

Office européen des brevets

(11) Publication number: **0 351 973**
**A2**

## EUROPEAN PATENT APPLICATION

(21) Application number: **89306682.9**

(22) Date of filing: **30.06.89**

(51) Int. Cl.⁴: **A23L 1/236 , C13F 3/00 , A23G 3/30**

Amended claim in accordance with Rule 86 (2) EPC for the following Contracting State: ES

(30) Priority: **21.07.88 US 222497**

(43) Date of publication of application:
**24.01.90 Bulletin 90/04**

(84) Designated Contracting States:
**BE CH DE ES FR GB GR IT LI NL SE**

(71) Applicant: **WARNER-LAMBERT COMPANY**
**201 Tabor Road**
**Morris Plains New Jersey 07950(US)**

(72) Inventor: **Hussein, Mamoun Mahmoud**
**115 Boulevard**
**Mountain Lakes New Jersey 07046(US)**
Inventor: **Militescu, Carolina**
**76 Flanders Drakestown Road**
**Flanders New Jersey 07836(US)**
Inventor: **Bunick, Frank John**
**10R Village Green**
**Budd Lake New Jersey 07828(US)**
Inventor: **Moskowitz, Alan**
**25 Barbara Drive**
**Succasunna New Jersey 07876(US)**

(74) Representative: **Jones, Michael Raymond et al**
**HASELTINE LAKE & CO. Hazlitt House 28**
**Southampton Buildings Chancery Lane**
**London WC2A 1AT(GB)**

(54) Savoury flavoured nonsweet compositions using sweet carbohydrate bulking agents and processes for their preparation.

(57) The present invention pertains to a savory flavored nonsweet composition comprising a sweet carbohydrate bulking agent, a savory flavoring agent and a sufficient amount of a sweetness inhibiting agent to nullify the sweetness of the bulking agent.

The present invention also pertains to a method for preparing a savory flavored nonsweet composition which comprises heating and mixing a sweet carbohydrate bulking agent at elevated temperatures, cooling the bulking agent to a temperature below about 120° C., admixing the savory flavoring agent and the sweetness inhibiting agent with the bulking agent and forming the resulting mixture into a desired shape.

EP 0 351 973 A2

# SAVOURY FLAVOURED NONSWEET COMPOSITIONS USING SWEET CARBOHYDRATE BULKING AGENTS AND PROCESSES FOR THEIR PREPARATION

This invention relates to savory flavored nonsweet compositions. The invention also relates to methods by which these savory flavored nonsweet compositions may be prepared.

The use of sweet carbohydrates in foods as fillers or bulking agents is well established. However, above certain concentration levels, the sweetness of these carbohydrates becomes excessive. This excessive sweetness, which is not taste compatible with savory flavors, can also mask desirable flavors.

United Kingdom patent application 2,157,148, assigned to Tate & Lyle, plc, discloses the use of sweetness inhibiting agents to reduce the sweetness of an ingestible composition such as a sweetening sugar or a sugar alcohol. The preferred inhibiting agents disclosed comprise two related series of compounds which are ethers or thioethers of acetic acid derivatives.

United States patent 4,642,240, assigned to General Foods Corporation, discloses the use of the sweetness inhibiting agent 3-aminobenzenesulfonic acid and derivatives thereof in foodstuff compositions.

United States patent 4,567,053, assigned to Tate & Lyle, plc, discloses the use of certain substituted phenylalkyl carboxylic acid salts and substituted phenyl ketoalkyl carboxylic acid salts to reduce the sweetness of sugars and sugar alcohols.

United States patent 4,544,565, assigned to General Foods Corporation, discloses the use of certain substituted benzoylalkyl carboxylic acid salts to reduce the sweetness of foodstuff compositions.

United Kingdom patent application 2,180,534, assigned to General Foods Corporation, discloses the use of certain substituted benzoyloxy acetic and 2-propionic acid derivatives as sweetness inhibiting agents.

Accordingly, there is a need for snack food compositions which are not sweet and which do not mask desirable flavors. There is also a need for savory flavored snack foods which incorporate traditional candy bases in a nonsweet application. Traditional candy bases are economical and are easy to manufacture into food products. In addition, these food products which incorporate traditional candy bases generally have long shelf lives and are easy to transport.

The present invention pertains to a pleasant tasting savory flavored nonsweet composition comprised of a sweet carbohydrate bulking agent, a savory flavoring agent and a sufficient amount of a sweetness inhibiting agent to nullify the sweetness of the bulking agent.

The present invention also pertains to a method for preparing a savory flavored nonsweet composition which comprises heating and mixing a sweet carbohydrate bulking agent at elevated temperatures, cooling the bulking agent to a temperature below about 120° C,.admixing a savory flavoring agent and a sweetness inhibiting agent with the bulking agent, and forming the resulting mixture into a desired shape.

Applicants have discovered that compositions which simulate the taste of savory flavored snacks may be prepared from a sweet carbohydrate bulking agent, a savory flavoring agent and a sufficient amount of a sweetness inhibiting agent to nullify the sweetness of the bulking agent. The compositions of the present invention are different from conventional candy-like compositions because they are devoid of sweetness. Depending upon the carbohydrate bulking agent employed, the savory flavored compositions can provide fewer calories than the snacks they simulate.

In a preferred embodiment, the savory flavored nonsweet compositions of the present invention comprise in percentages by weight (1) a sweet carbohydrate bulking agent in an amount from about 94.5% to about 99.97%., (2) a savory flavoring agent in an amount from about 0.02% to about 5.0%, and (3) a sweetness inhibiting agent in an amount from about 0.01% to about 0.5%. In a most preferred embodiment, the compositions comprise in percentages by weight (1) a sweet carbohydrate bulking agent in an amount from about 97.8% to about 99.89%, (2) a savory flavoring agent in an amount from about 0.1% to about 2.0%, and (3) a sweetness inhibiting agent in an amount from about 0.01% to about 0.2%. In addition, salt may be optionally added to the composition in an amount up to about 2%, and preferably from about 0.1% to about 0.5%, by weight of the composition.

The sweet carbohydrate bulking agents of the present invention must be sufficient in physical make-up to provide adequate bulk and texture to the composition. Suitable sweet carbohydrate bulking agents include sugars, sugar alcohols, hydrogenated hexoses, hydrogenated disaccharides, sweet hydrogenated starch hydrolysates and mixtures thereof.

Suitable sugar bulking agents include monosaccharides, disaccharides and polysaccharides such as sucrose, glucose, xylose, ribose, mannose, galactose, fructose, dextrose, maltose, invert sugar, partially hydrolyzed starch and corn syrup solids, and mixtures thereof. Mixtures of sucrose and corn syrup solids are the preferred sugar bulking agents. The weight ratio of sucrose to corn syrup solids is generally from about 1:1 to about 2:1, preferably from about 1.2:1 to about 2:1, and most preferably from about 1.3:1 to about 1.7:1.

Suitable sugar alcohol bulking agents include sorbitol, xylitol, mannitol, galactitol, maltitol, and mixtures thereof.

Suitable hydrogenated hexoses include hydrogenated lactose manufactured under the trademark LACTITOL by C.C.A. Biochem b.v. LACTITOL contains about half the calories of other sugar alcohols. Suitable hydrogenated disaccharides include hydrogenated isomaltulose manufactured under the tradename PALATINIT by Palatinit Subungsmittel GMBH.

The hydrogenated starch hydrolysates employed herein may include those disclosed in reissue United States patent nos. Re. 25,959, 3,356,811, 4,279,931 and various hydrogenated glucose syrups and/or powders which contain sorbitol, hydrogenated disaccharides, hydrogenated higher polysaccharides, or mixtures thereof.

Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. The degree of polymerization (DP) of various hydrogenated starch hydrolysates is presented in Table 1.

Products high in percentages of monomer (DP1) and dimer (DP2) will have higher sweetness levels and produce softer confectionery products. Products high in percentages of polymers will have low sweetness and produce confectionery products that have a hard texture. DP-1, for example could stand for sorbitol, mannitol, xylitol or any other hydrogenated monosaccharide. DP-1 is generally sorbitol due to the natural abundance of glucose in the corn syrup starting material. Similarly, the percent DP-2 defines the amount of hydrogenated disaccharides such as maltitol present while DP-3, DP-4, DP-5...and so on define the amounts of higher hydrogenated saccharides present in the hydrogenated starch hydrolysate.

Preferably the hydrogenated starch hydrolysates used in the present invention will have a DP-1 value from about 5% to about 10%, a DP-2 value from about 15% to about 65%, and a DP-3 and DP-4 value from about 30% to about 70%.

TABLE 1

| Degree of Polymerization (DP) Value For Typical Hydrogenated Starch Hydrolysates | | | | | | | |
|---|---|---|---|---|---|---|---|
| | DP-1 | DP-2 | DP-3 | DP-4 + | DP-3-DP-6 | DP-6 + | DP-3 + |
| Lycasin* | 6-8 | 50-55 | N.D.*** | N.D. | 20-25 | 15-20 | 35-45 |
| Hystar** | 15 | 50 | 12 | 23 | | | 35 |
| HM-75 | | | | | | | |
| Hystar 3375 | 14 | 18 | 10 | 58 | | | 68 |
| Hystar 4075 | 13 | 23 | 12 | 49 | | | 51 |
| Hystar 5875 | 7 | 60 | 11 | 22 | | | 33 |
| Hystar 6075 | 14 | 8 | 10 | 68 | | | 78 |

\* Lycasin is a trademark of Roquette Corporation.
\*\* Hystar is a trademark of Lonza, Inc.
\*\*\* Not determined

Savory flavors are generally considered nonsweet flavors, that is salty and/or spicy flavors, although savory flavors may contain sweet components. Suitable savory flavoring agents include natural and artificial food flavors such as spices, herbs, seasonings, vegetables, cooked meats, cooked fish, and seafood, cheese, yeast, protein hydrolysates, and smoke, both individual and mixed. Such flavoring agents include liquid and solid forms. Nonlimiting examples of savory flavors include beef, pork, ham, poultry, cheddar, mozzarella, gouda, onion, garlic, tomato, pepper, paprika, nutmeg, coriander, yeast, soya, nuts, dried food ingredients, and the like. Preferred savory flavoring agents are pizza flavor, tomato flavor, cheese flavor, onion flavor, garlic flavor, bacon bits flavor, crouton flavor, cereal flavor, fried chip flavor, fried vegetable flavor, poultry, meat, and fish flavors, Mexican flavors and mixtures thereof. Mexican flavors include jalapeno, nacho, chile, tamale and Mexican spice flavors and mixtures thereof. A general discussion of savory flavors may be found in B. Dunstan, Food, February 1988 at pp. 43-46 and H. Heath, Food, February 1988 at pp. 20-23, which disclosures are incorporated herein by reference.

Flavoring agents include compounds which modify taste perception. Particularly useful taste modifiers include the food acids. Suitable food acids include citric acid, fumaric acid, malic acid, ascorbic acid, tartaric acid, lactic acid, sorbic acid, and mixtures thereof

The amount of savory flavoring agent employed is normally a matter of preference subject to such factors as the type of flavor, the type of bulking agent, and the strength of flavor desired. In general, the flavoring agent is present in amounts from about 0.02% to about 5.0%, by weight of the total composition. Preferably, the flavoring agent is present in amounts from about 0.1% to about 2.0%, by weight of the total composition.

Suitable sweetness inhibiting agents include those compounds disclosed in United Kingdom patent application 2,157,148, which application is incorporated herein by reference. The preferred sweetness inhibiting agents disclosed comprise two related series of compounds which are ethers or thioethers of acetic acid derivatives. The sweetness inhibiting compounds have the general formula:

A--(D)m--C(B)(E)--COOX

where m represents 0 or 1; A represents a homocyclic or heterocyclic aromatic group; B represents hydrogen, a 1-3 carbon aliphatic group or phenyl; or, when m represents 0, A and B complete a homocyclic or heterocyclic aromatic group, or a methylidene group substituted by a homocyclic or heterocyclic aromatic group; E represents hydrogen or alkyl or; when m represents 0, hydroxy or alkoxy; D represents oxygen or sulfur; X represents hydrogen or a physiologically compatible cation, with the provision that m represents 1 when A represents phenyl and B and C both represent hydrogen; or when A represents unsubstituted phenyl, B represents alkyl and C represents hydrogen.

Other suitable sweetness inhibiting agents include the salts of substituted benzoylalkyl carboxylic acids disclosed in United States patent 4,544,565, which patent is incorporated herein by reference. These sweetness inhibiting agents have the general formula:

HOOC--CH(R7)--CH(R8)--CO--R9

where R7 is hydrogen or C1-C3 alkyl, R8 is hydrogen or C1-C3 alkyl, and R9 represents a pentasubstituted phenyl group the substituents of which are independently selected from the group consisting of hydrogen, C1-C3 alkyl, C1-C3 alkoxy, C1-C2 hydroxyalkyl, hydroxy and carboxy.

Other suitable sweetness inhibiting agents include 3-aminobenzenesulfonic acid and derivatives thereof disclosed in United States patent 4,642,240, which patent is incorporated herein by reference.

Other suitable sweetness inhibiting agents include the substituted phenylalkyl carboxylic acid salts and substituted phenyl ketoalkyl carboxylic acid salts disclosed in United States patent 4,567,053, which patent is incorporated herein by reference. These sweetness inhibiting agents have the general formula:

XOOC--(CO)m(CH2)n--C6H4--R

where m represents 0 or 1, and when m represents 0, n represents 1,2 or 3 and p represents 1,2,3 or 4, and when m represents 1, n represents 1 or 2 and p represents 0, 1, 2, 3 or 4; the substituents R individually represent a lower alkoxy group, phenoxy group or a lower alkyl or trifluoromethyl group; two substituents R together represent an aliphatic chain linked to the phenyl ring at two positions, or one substituent R represents a hydroxy group while at least one other substituent R represents an alkoxy group and X is a physiologically acceptable cation.

Other suitable sweetness inhibiting agents include the substituted benzoyloxy acetic and 2-propionic acid salt derivatives disclosed in United Kingdom patent application 2,180,534, which application is incorporated herein by reference. These sweetness inhibiting agents have the general formula:

R1--C6H4--COO--CR2R3--COOH

where R1 is hydroxy or alkoxy containing 1 to 4 carbons, and R1 and an adjacent R2 together form a methylenedioxy ring; each R2 individually is selected from the group consisting of hydrogen, alkyl containing from 1 to 3 carbons, alkoxy containing up to 2 carbons, hydroxy and carboxymethoxy group with the provision that when R2 individually is a functional group of alkyl, alkoxy, hydroxy or carboxymethoxy, the number of functional groups will not exceed two; and R3 is hydrogen or methyl.

Preferred sweetness inhibiting agents are 2-p-methoxyphenoxypropionic acid manufactured under the trademark LACTISOLE by Tate & Lyle, plc. and p-methoxybenzylacetic acid and mixtures thereof.

The amount of sweetness inhibiting agent to be employed is normally the amount sufficient to nullify the sweetness of the sweet carbohydrate bulking agent. Preferably the sweetness inhibiting agent is present in an amount from about 0.01% to about 0.5%, by weight of the final composition. Most preferably, the sweetness inhibiting agent is present in an amount from about 0.01% to about 0.2%, by weight of the final composition.

Salt may also be optionally included in the savory flavored nonsweet compositions of the present invention. Suitable salts include sodium chloride, potassium chloride, ammonium chloride and mixtures thereof. Sodium chloride is the preferred salt. Salts when used are generally present in amounts up to about

4

2% by weight, and preferably from about 0.1% to about 0.5%, by weight of the final product.

In addition to the foregoing materials, the savory flavored nonsweet compositions of the present invention may also include further additives utilized conventionally to prepare candy and candy-like compositions. Thus the instant compositions may include materials selected from colorants, pigments, decolorants, oils, fats, preservatives, humectants, stickiness reducers, graining compounds, and so forth, and mixtures thereof, in varying amounts.

The colorants useful in the present invention are preferably water-soluble. A preferred pigment, titanium dioxide, may be incorporated in amounts up to about 1% by weight. Also, the colorants may include other dyes suitable for food, drug and cosmetic applications, and known as F.D.& C. dyes and lakes. A full recitation of all F.D.& C. colorants and their corresponding chemical structures may be found in the Kirk-Othmer Encyclopedia of Chemical Technology, 3rd edition, in Volume 6, at pages 561-595, which text is incorporated herein by reference. These pigments and colorants when used are generally present in amounts up to about 1%, by weight of the final composition, and preferably from about 0.01% to about 1%, by weight of the final composition.

The decolorants which may be incorporated into the present composition to prevent color changes due to aging include such compounds as sodium metabisulfite, ascorbic acid, and the like. Decolorants when used are generally present in amounts from about 0.05% to about 0.25%, by weight of the final product.

Suitable oils and fats include unsaturated oils, hydrogenated and partially hydrogenated vegetable and animal oils and fats, coconut oil, palm kernel oil, cottonseed oil, sunflower oil, soy oil, corn oil, beef tallow, lard, sucrose polyesters, polyethylene glycols and mixtures thereof. These ingredients when used are generally present in amounts up to about 10%, by weight of the final composition.

Suitable preservatives include butylated hydroxy-anisole (BHA), butylated hydroxytoluene (BHT), benzoic acid, ascorbic acid, methylparaben, propylparaben, ethylene-diaminetetraacetic acid (EDTA), tocopherols and mixtures thereof. Preservatives when used are generally present in amounts up to about 1.0% by weight, and preferably from about 0.1% to about 1.0%, by weight of the final composition.

Suitable humectants include glycerin, sorbitol, fructose and mixtures thereof. Humectants when used are generally present in amounts up to about 5% by weight, and preferably from about 1.0% to about 5.0%, by weight of the final composition.

Suitable surface stickiness reducers include mono- and diglycerides, and mixtures thereof. The stickiness reducers when used are present in amounts up to about 1.0% by weight, and preferably from about 0.1% to about 1.0%, by weight of the final composition.

Suitable graining compounds to promote faster setting times for the final product may be selected from crystalline sugars including sucrose, crystalline sorbitol, lactose, xylitol, mannitol and mixtures thereof. The graining compound when used is present in amounts from about 1.0% to about 10.0%, by weight of the composition.

The preparation of confectionery formulations is historically well known and has changed little through the years. Confectionery items have been classified as either "hard" confectionery or "soft" confectionery. The savory flavored nonsweet compositions of the present invention can be prepared in conventional hard and soft confections.

Savory flavored hard confectionery may be processed and formulated by conventional means. In general, a hard confectionery has a base composed of a mixture of sugar and corn syrup solids. The base is generally present in amounts from about 95.0% to about 99.8%, by weight of the composition. The weight ratio of sugar to corn syrup solids is generally from about 1:1 to about 2:1, preferably from about 1.2:1 to about 2:1, and most preferably from about 1.3:1 to about 1.7:1. The base normally has from about 0.5% to about 2.5% moisture. The syrup component generally is prepared from corn syrups high in fructose, but may include other materials.

The base of the hard confectioneries may also be prepared from nonfermentable carbohydrates such as sorbitol, mannitol and hydrogenated corn syrup. The confectionery base may contain up to about 95% sorbitol, a mixture of sorbitol and mannitol in a ratio of from about 9.5 to 0.5, to about 7.5 to 2.5, respectively, and hydrogenated corn syrup in an amount up to about 99.8%, by weight of the final composition.

The base of the hard confectioneries may also be prepared from hydrogenated starch hydrolysates. The confectionery bases may contain hydrogenated starch hydrolysates in an amount up to about 99.8%, a sugar alcohol in an amount up to about 45%, and water in an amount from about 0.75% to about 5%, all by weight of the final composition. Such confectionery may be routinely prepared by conventional methods such as those involving fire cookers, vacuum cookers, and scraped-surface cookers also referred to as high speed atmospheric cookers.

Fire cookers involve the traditional method of making a candy base. In this method, the desired quantity of sugar or other carbohydrate bulking agent is dissolved in water by heating in a kettle until the bulking agent dissolves. Corn syrup or an invert sugar may then be added and cooking continued until a final temperature of 145 to 156° C. is achieved. The batch is then cooled and worked as a plastic-like mass to incorporate additives such as flavors, colorants and the like.

A high-speed atmospheric cooker uses a heat-exchanger surface which involves spreading a film of candy on a heat exchange surface, the candy is heated to 165 to 170° C. in a few minutes. The candy is then rapidly cooled to 100 to 120° C. and worked as a plastic-like mass enabling incorporation of the additives, such as flavors, colorants and the like.

In vacuum cookers, the carbohydrate bulking agent is boiled to 125 to 132° C. , vacuum is applied and additional water is boiled off without extra heating. When cooking is complete, the mass is a semi-solid and has a plastic-like consistency. At this point, flavors, colorants, and other additives are admixed in the mass by routine mechanical mixing operations.

The optimum mixing required to uniformly mix the flavors, colorants and other additives during conventional manufacturing of hard confectionery is determined by the time needed to obtain a uniform distribution of the materials. Normally, mixing times of 4 to 10 minutes have been found to be acceptable.

Once the candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets, Volume 1 (1980), Marcel Dekker, Inc., New York, N.Y. at pages 339 to 469, which disclosure is incorporated herein by reference.

The apparatus useful in accordance with the present invention comprises cooking and mixing apparatus well known in the confectionery manufacturing arts, and therefore the selection of the specific apparatus will be apparent to the artisan.

Similar to hard confectionery, savory flavored soft confectionery may be utilized in this invention. The preparation of soft confections, such as nougat, involves conventional methods, such as the combination of two primary components, namely (1) a sugar or sugarless high boiling syrup such as corn syrup, a hydrogenated starch hydrolysate and a sugar alcohol or the like and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from about 0.5 to about 0.7 grams/cc.

The high boiling syrup, or "bob syrup" of the soft confectionery is relatively viscous and has a higher density than the frappe component, and frequently contains a substantial amount of sugar or other carbohydrate bulking agent. Conventionally, the final nougat composition is prepared by the addition of the "bob syrup" to the frappe under agitation, to form the basic nougat mixture. Further ingredients such as flavoring, additional sugar or other carbohydrate bulking agent, colorants, preservatives, medicaments, mixtures thereof and the like may be added thereafter also under agitation. A general discussion of the composition and preparation of nougat confections may be found in B.W. Minifie, Chocolate, Cocoa and Confectionery: Science and Technology, 2nd edition, AVI Publishing Co., Inc., Westport, Conn. (1980), at pages 424-425, which disclosure is incorporated herein by reference.

The procedure for preparing the savory flavored soft confectionery involves known procedures. In general, the frappe component is prepared first and thereafter the syrup component is slowly added under agitation at a temperature of at least about 65° C., and preferably at least about 100° C. The mixture of components is continued to be mixed to form a uniform mixture, after which the mixture is cooled to a temperature below 80° C., at which point, the flavor may be added. The mixture is further mixed for an additional period until it is ready to be removed and formed into suitable confectionery shapes.

The present invention includes a savory flavored chewing gum composition and a method for preparing a savory flavored chewing gum composition, including both chewing gum and bubble gum formulations. As used herein, the term chewing gum product means a product containing a chewing gum formulation. In general, the chewing gum formulation will comprise from about 5% to about 99% by weight, and preferably from about 20% to about 95%, by weight of the savory flavored chewing gum product.

With regard to a chewing gum formulation, such formulations contain a gum base, a savory flavored nonsweet composition and various additives. The gum base employed will vary greatly depending upon various factors such as the type of base desired, the consistency desired and the other components used to make the final chewing gum product. In general, the gum base will be present in amounts from about 5% to about 45%, by weight of the final chewing gum composition, and preferably in amounts from about 15% to about 25%, by weight of the final chewing gum composition. The gum base may be any water-insoluble gum base known in the art. Illustrative examples of suitable polymers in gum bases include both natural and synthetic elastomers and rubbers. For example, those polymers which are suitable as gum bases include,

6

without limitation, substances of vegetable origin such as chicle, jelutong, gutta percha and crown gum. Synthetic elastomers such as butadiene-styrene copolymers, isobutylene-isoprene copolymers, polyethylene, polyisobutylene and polvinylacetate and mixtures thereof, are particularly useful.

The gum base composition may contain elastomer solvents to aid in softening the elastomer component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include the pentaerythritol ester of partially hydrogenated wood rosin, the pentaerythritol ester of wood rosin, the glycerol ester of wood rosin, the glycerol ester of partially dimerized rosin, the glycerol ester of polymerized rosin, the glycerol ester of tall oil rosin, the glycerol ester of wood rosin and the partially hydrogenated wood rosin and the partially hydrogenated methyl ester of rosin such as polymers of alpha-pinene and beta-pinene; terpene resins including polyterpene and mixtures thereof. The solvent may be employed in amounts from about 10% to about 75% by weight, and preferably from about 45% to about 70%, by weight of the gum base.

The savory flavored nonsweet composition will comprise a sweet carbohydrate bulking agent, a savory flavoring agent and a sufficient amount of a sweetness inhibiting agent to nullify the sweetness of the bulking agent. The sweet carbohydrate bulking agents, savory flavoring agents and sweetness inhibiting agents useful in this invention have been set out above. In general, the savory flavored nonsweet composition will be present in amounts from about 25% to about 75% by weight, and preferably from about 50% to about 65%, by weight of the final chewing gum composition.

A variety of traditional ingredients such as plasticizers or softeners such as lanolin, stearic acid, sodium stearate, potassium stearate, glyceryl triacetate, glycerine and the like as well as natural and synthetic waxes, petroleum waxes, such as polyurethane waxes, paraffin waxes and microcrystalline waxes may also be incorporated into the gum base to obtain a variety of desirable textures and consistency properties. These individual additional materials are generally employed in amounts of up to about 30% by weight and preferably in amounts from about 3% to about 20%, by weight of the final gum base composition.

The chewing gum composition may additionally include the conventional additives of flavoring agents, coloring agents such as titanium dioxide, emulsifiers such as lecithin and glyceryl monostearate, and additional fillers such as aluminum hydroxide, alumina, aluminium silicates, calcium carbonate, talc and combinations thereof. These fillers may also be used in the gum base in various amounts. Preferably the amount of fillers when used will vary from about 4% to about 30%, by weight of the final chewing gum.

The colorants useful in the present invention include pigments which may be incorporated in amounts up to about 6% by weight of the composition. A preferred pigment, titanium dioxide, may be incorporated in amounts up to about 1% by weight. Also, the colorants may include other dyes suitable for food, drug and cosmetic applications and known as F.D.& C. dyes and lakes. The materials acceptable for the foregoing uses are preferably water-soluble. Illustrative examples include the indigo dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzyl-amino)-diphenylmethylene][1-(N-ethyl-N-p-sulfoniumbenzyl)-2,5-cyclohexadieneimine]. A full recitation of all F.D.& C. colorants and their corresponding chemical structures may be found in the Kirk-Othmer Encyclopedia of Chemical Technology, 3rd Edition, in volume 6 at pages 561-595, which text is incorporated herein by reference.

Suitable oils and fats usable in the present composition include partially hydrogenated vegetable or animal fats, such as coconut oil, palm kernel oil, beef tallow, lard, and the like. These ingredients when used are generally present in amounts up to about 7.0% by weight, and preferably up to about 3.5%, by weight of the final composition.

The gum base is conventionally melted at temperatures that may range from about 60° C. to about 120° C. for a period of time sufficient to render the base molten. For example, the gum base may be heated under these conditions for a period of about thirty minutes just prior to being admixed with the remaining ingredients of the gum composition such as a savory flavored nonsweet compositions, coloring and the like. Mixing is continued until a uniform mixture of gum base is obtained. Thereafter the gum base mixture may be formed into desirable chewing gum shapes.

The savory flavored nonsweet compositions may be formulated with conventional ingredients which offer a variety of textures to suit particular applications. Such ingredients may be in the form of hard and soft confectioneries, tablets, toffee, nougat, chewy candy, chewing gum and so forth. The acceptable ingredients may be selected from a wide range of materials. Without being limited thereto, such materials include diluents, binders and adhesives, lubricants, disintegrants, bulking agents, humectants and buffers and adsorbents. The preparation of such confectioneries and chewing gum products is well known.

The present invention is further illustrated by the following examples which are not intended to limit the effective scope of the claims. All parts and percentages in the examples and throughout the specification and claims are by weight of the final composition unless otherwise specified.

EXAMPLE 1

Inventive Run 1

This Example demonstrates a method for preparing a savory flavored composition according to the process of the invention having the following composition.

| Ingredient | Percent by Weight |
|---|---|
| Sucrose | 49.70 |
| Corn Syrup Solids | 49.70 |
| Mexican Nacho Flavor | 0.25 |
| Sodium Chloride | 0.25 |
| Lactisole (Tate & Lyle) | 0.10 |
| | Total 100.0 |

Sucrose, corn syrup solids having a dextrose equivalence of 42 and sodium chloride were heated and mixed in sufficient water to dissolve the components. Heating was continued until the temperature of the mass reached 145° C. After the mass was cooled to under 120° C., Mexican nacho flavor and the sweetness inhibiting agent Lactisole (Tate & Lyle) were admixed by folding the flavoring component and the sweetness inhibiting agent into the mass. The mix was formed into tablets.

The product was a savory flavored composition which had a pleasant Mexican nacho flavor.

The invention being thus described, it will be obvious that the same may be varied in many ways. Such variations are not to be regarded as a departure from the spirit and scope of the invention and all such modifications are intended to be included within the scope of the following claims.

## Claims

1. A savoury flavoured nonsweet composition comprising a sweet carbohydrate bulking agent, a savoury flavouring agent and a sufficient amount of a sweetness inhibiting agent to nullify the sweetness of the bulking agent.

2. A composition according to claim 1, wherein the sweet carbohydrate bulking agent is present in an amount from 94.5 to 99.97%, the savoury flavouring agent is present in an amount from 0.02% to 5.0%, and the sweetness inhibiting agent is present in an amount from 0.01% to 0.5%, by weight of the final composition.

3. A composition according to claim 2, wherein the sweet carbohydrate bulking agent is present in an amount from 97.8% to 99.89%, the savoury flavouring agent is present in an amount from 0.1% to 2.0% and the sweetness inhibiting agent is present in an amount from 0.01% to 0.2%, by weight of the final composition.

4. A composition according to any preceding claim, wherein the sweet carbohydrate bulking agent is selected from sugars, sugar alcohols, hydrogenated hexoses, hydrogenated disaccharides, sweet hydrogenated starch hydrolysates and mixtures thereof.

5. A composition according to claim 4, wherein the sweet carbohydrate bulking agent is a sugar comprising sucrose and corn syrup solids in the ratio of from 1.2 : 1.0 to 2.0 : 1.0, respectively.

6. A composition according to claim 4, wherein the sweet carbohydrate bulking agent is a sugar alcohol selected from the group consisting of sorbitol, xylitol, mannitol, galactitol, maltitol, and mixtures thereof.

7. A composition according to claim 4, wherein the sweet carbohydrate bulking agent is a hydrogenated starch hydrolysate having a DP-1 value from 5% to 10%, a DP-2 value from 15% to 65%, and a DP-3 and DP-4 value from 30% to 70%.

8. A composition according to any preceding claim, wherein the sweetness inhibiting agent is selected from the group consisting of 2-p-methoxyphenoxypropionic acid, p-methoxy-benzylacetic acid, and mixtures thereof.

9. A composition according to any preceding claim, wherein the savoury flavouring agent is selected from pizza flavour, tomato flavour, cheese flavour, onion flavour, garlic flavour, bacon bits flavour, crouton flavour, cereal flavour, fried chip flavour, fried vegetable flavour, poultry, meat, and fish flavours, and Mexican flavours such as jalapeno, nacho, chile, tamale and Mexican spice flavours and mixtures thereof.

10. A process for the preparation of a savoury flavoured nonsweet composition according to any one of claims 1 to 9 which process comprises:
heating and mixing the sweet carbohydrate bulking agent in water at elevated temperatures;
cooling the bulking agent to a temperature below approximately 120˚C;
admixing the savoury flavouring agent and the sweetness inhibiting agent with the bulking agent; and
forming the resulting mixture into a desired shape.

11. A savoury flavoured confectionery product which comprises:
a confectionery bulking agent in amounts up to approximately 99%; and
a savoury flavoured nonsweet composition according to any one of claims 1 to 9;
the savoury flavoured nonsweet composition being admixed in the confectionery bulking agent
(all percents herein are by weight of the savoury flavoured confectionery product).

12. A savoury flavoured chewing gum product which comprises:
a chewing gum composition in an amount up to approximately 99% including a gum base; and
a savoury flavoured nonsweet composition according to any one of claims 1 to 9;
the savoury flavoured nonsweet composition being admixed in the chewing gum composition
(all percents herein are by weight of the savoury flavoured chewing gum product).

13. A process for the preparation of a savoury flavoured chewing gum product according to claim 12, which process comprises:
admixing the gum base at a temperature from 60 to 120˚C with the savoury flavoured nonsweet composition;
continuing the mixing until a uniform mixture of gum base and savoury flavoured composition is obtained; and
thereafter forming the mixture into suitable chewing gum shapes.

Claims for the Contracting State: ES

1. A process for the preparation of a savoury flavoured nonsweet composition comprising a sweet carbohydrate bulking agent, a savoury flavouring agent and a sufficient amount of a sweetness inhibiting agent to nullify the sweetness of the bulking agent which process comprises:
heating and mixing the sweet carbohydrate bulking agent in water at elevated temperatures;
cooling the bulking agent to a temperature below approximately 120˚C;
admixing the savoury flavouring agent and the sweetness inhibiting agent with the bulking agent; and
forming the resulting mixture into a desired shape.

2. A process according to claim 1, wherein the sweet carbohydrate bulking agent is present in an amount from 94.5% to 99.97%, the savoury flavouring agent is present in an amount from 0.02% to 5.0% and the sweetness inhibiting agent is present in an amount from 0.01% to 0.5%, by weight of the final composition.

3. A process according to claim 1 or 2, wherein the sweet carbohydrate bulking agent is selected from sugars, sugar alcohols, hydrogenated hexoses, hydrogenated disaccharides, sweet hydrogenated starch hydrolysates, and mixtures thereof.

4. A process according to claim 3, wherein the sweet carbohydrate bulking agent is a sugar comprising sugar and corn syrup solids in the ratio of from 1.2 : 1.0 to 2.0 : 1.0, respectively.

5. A process according to claim 3, wherein the sweet carbohydrate bulking agent is a sugar alcohol selected from sorbitol, xylitol, mannitol, galactitol, maltitol, and mixtures thereof.

6. A process according to claim 3, wherein the sweet carbohydrate bulking agent is a hydrogenated starch hydrolysate having a DP-1 value from 5% to 10%, a DP-2 value from 15% to 65%, and a DP-3 and DP-4 value from 30% to 70%.

7. A process according to any preceding claim, wherein the sweetness inhibiting agent is selected from the group consisting of 2-p-methoxyphenoxypropionic acid, p-methoxy-benzylacetic acid, and mixtures thereof.

8. A process according to any preceding claim, wherein the savoury flavoured agent is selected from pizza flavour, tomato flavour, cheese flavour, onion flavour, garlic flavour, bacon bits flavour, crouton flavour, cereal flavour, fried chip flavour, fried vegetable flavour, poultry, meat, and fish flavours, and Mexican flavours such as jalapeno, nacho, chile, tamale and Mexican spice flavours and mixtures thereof.

9. A process for the preparation of a savoury flavoured confectionery product comprising:
a confectionery bulking agent in amounts up to approximately 99%; and
a savoury flavoured nonsweet composition prepared according to any one of claims 1 to 8,
(all percents herein are by weight of the savoury flavoured confectionery product),
which process comprises admixing the bulking agent and savoury composition.

10. A process for the preparation of a savoury flavoured chewing gum product comprising:
a chewing gum composition in an amount up to approximately 99% including a gum base; and
a savoury flavoured nonsweet composition according to any one of claims 1 to 8,
(all percents herein are by weight of the savoury flavoured chewing gum product)
which process comprises:
admixing the gum base at a temperature from 60 to 120°C with the savoury flavoured nonsweet composition;
continuing the mixing until a uniform mixture of gum base and savoury flavoured composition is obtained; and
thereafter forming the mixture into suitable chewing gum shapes.